# EUROPEAN PATENT SPECIFICATION

(11) **EP 2 912 326 B1**
(45) Date of publication and mention of the grant of the patent: **31.05.2017**
(21) Application number: 13777171.3
(22) Date of filing: 12.08.2013
(51) Int. Cl.: F16B 19/10, F16B 21/12

(54) **SELF-LOCKING CYLINDRICAL ASSEMBLY**
SELBSTVERRIEGELNDE ZYLINDRISCHE ANORDNUNG
ENSEMBLE CYLINDRIQUE À BLOCAGE AUTOMATIQUE

(30) Priority: 26.10.2012 SI 201200322
(43) Date of publication of application: 02.09.2015
(73) Proprietor: Tajfun Planina Proizvodnja Strojev, D.o.o., 3225 Planina Pri Sevnici (SI)
(72) Inventor: SPAN, Iztok, 1000 Ljubljana (SI)
(74) Representative: Borstar, Dusan
(86) International application number: PCT/SI2013/000049
(87) International publication number: WO 2014/065761

(56) References cited:
- GB-A- 1 532 723
- US-A- 575 032

## Description

The invention refers to a self-locking cylindrical assembly, in particular a pin or a bolt or an axle. In the field of machinery, such inventions belong to machine parts, namely to parts serving to interconnect machine parts, in particular to unthreaded pins or bolts, which can be attached by means of mechanical expansion.

The purpose of the invention is to create a long-term usable i.e. repetitively usable cylindrical assembly without any outwardly protruding components, which could result in hooking, which could be inserted into each disposable bore or a similar passage, in which it could be automatically arrested and firmly protected against undesired removal there-from, and in addition to that, when desired, it should also be easily removed from said bore or passage by means of a single hand and without any need on using a tool or similar requisite.

A self-locking assembly is disclosed in US 575 032 A. Another self-locking assembly, which is disclosed in CN 20170573 U, comprises a hollow cylindrical bush comprising a broadened first end portion with a rim and a second end portion, which is closed by means of an elastic membrane as well as with in the circumferential direction radially spaced openings, in which arresting sliders are inserted, which are freely displaceable in the radial direction of the bush. An actuating rod is inserted throughout the hollow bush, and protrudes outwardly from said bush in the area of said broader end portion thereof, while its outwardly protruding end portion is bent in the form of a letter L, by which an arresting arm is formed, which is located outside of said bush. Said actuating rod is on its opposite end portion furnished with a conical protrusion, the tip of which is faced away from said bent end portion, wherein said arresting sliders are rest on the inclined surface of said seat. The tip of said conical protrusion is rest on an elastic membrane, and simultaneously, said arresting sliders are in the interior interconnected with each other by means of an elastic member in the form of an elastic ring or a membrane, by which they are maintained closely to each other and do not protrude outwards from the circumference of said bush prior to use of said pin. A yoke with a recess is foreseen on said broader end portion of the bush in order to enable arresting of said arresting arm of the actuating rod in position, when the actuating rod is shifted towards the interior of the bush. Prior to inserting of said pin, the actuating rod is extracted, and the tip of said protrusion is located at the closed end portion of the bush adjacent to said membrane. Radial arresting sliders are located inside of the circumferential area of said bush, and the bush is allowed to be inserted into each disposable bore in such extent, which is determined by the seat on said broader end portion of the bush, by which the axial movement of said pin in one direction is prevented. When said pin is inserted into said bore, the arresting thereof is achieved by means of axial displacement of the actuating rod towards the interior of the bush, wherein the conical protrusion of the actuating rod pushes said arresting sliders apart from each other and pushes them radially outwards, upon which said sliders protrude outwards from the circumference of the bush and similarly like said seat prevent the pin from axially movement in the opposite direction. As soon as said displacement is concluded, said actuating rod is rotated within the interior of said bush, upon which said arm, which is located outside of the bush, is arrested by means of said yoke, by which the pin is secured against undesired removal from said bore. In the context of the expected functionality, the said membrane and the elastic member should be practically without any other choice available in the form if a ring or a membrane consisting of rubber. Consequently, during the first use, the pin is easily insertable into said bore, by which said inserting can be performed by means of a single hand and without any tool, and by which said pin is also secured against undesired removal. Said pin can optionally be removed from said bore, wherein firstly by means of the arresting arm releasing of the actuating rod is performed, upon which the membrane due to its elasticity pushes said conical seat towards the broader end portion of the bush, by which said rod is displaced outwards from the bush, which is then due to elasticity of said connecting member followed by returning of said radial arresting protrusions back to the interior of the bush, by which the removal of the pin from the bore is enabled. However, due to previously described concept it should be born in mind that said elastic member can be at least partially damaged and plastically deformed already during the first pressing of the rod towards the interior of said bush, so that by assuming the elasticity of the membrane and said connecting member each movement of said rod and, each movement of said arresting sliders cannot be performed in a completely reliable manner. In such circumstances, each removal of the pin without the tool is no more possible.

A still further problem represent the changes of fatigue properties and elasticity of the rubber, which is during the use exposed to weather conditions, UV-rays, contact to corroded parts or other influences, which can hinder the possibility of repetitively removal or placement of said pin. During the use, said L-shaped arm is particularly disturbing since it protrudes outwardly from the circumference of the pin and therefore represents an outwardly protruding part, to which adjacent object can be hooked, or by which each user is exposed to injuries. The presence of said arm is in the context of the previously mentioned problem deemed to be an essential deficiency.

The invention refers to a self-locking cylindrical assembly, which is insertable into at least essentially cylindrical bore, in which said assembly can be secured against undesired removal, or from which said assembly can be optionally removed and optionally re-inserted, wherein said assembly comprises a hollow cylindrical bush having a broader first end portion with an external seat, and a second end portion, which is furnished with two radial passages, which are adapted to receive radially displaceable arresting protrusions, as well as with an actuating rod, which is inserted within said bush and is displaceable to and fro along the central axis of said bush.

The invention proposes that said bush is furnished with an internal seat, which is formed by a broader internal area with a larger diameter located at the broad end portion thereof and a narrow internal area with a smaller diameter located at the opposite end portion of said bush, while an actuating rod is inserted within said bush, which is on its end portion facing towards the broader end portion of the bush interconnected with an actuating button having an outer diameter adjusted to the diameter of the broad internal area of the bush, so that by displacing thereof in the longitudinal direction of the bush the actuating rod is guided by means of the actuating button. A spring is inserted between said actuating button and said seat, by which said actuating button is pressed along said axis towards the broader end portion of the bush. Simultaneously, the actuating rod is on its opposite end portion furnished with a centrally arranged and towards the axis extending elongated hole, which is adapted to guide said actuating rod, as well as with two guiding recesses, which are open towards the exterior and positioned in a V-shaped arrangement converging thereby towards the broad end portion of the bush and diverging towards the opposite end portion of the bush and are moreover adapted to cooperate with protrusions of arresting sliders, which are radially displaceable within said passages in said bush. Said recesses are on both end portions thereof furnished with run-outs, which extend parallel to said central axis of the bush.

In a preferred embodiment of the invention, said spring is a compression spring, by which the actuating rod is surrounded.

Besides, a circumferential groove is foreseen on the internal surface of the broad internal area of the bush, and is adapted to cooperate with an elastically supported spherical member, which is embedded within the actuating rod for the purposes of arresting and retaining the rod in each pre-determined position, which is defined by means of the grove.

The invention will be described by means of the embodiment, which is shown in the enclosed drawing, wherein
- Fig. 1: is a longitudinal cross-section of a self-locking cylindrical assembly according to the invention, in its locked state during the use;
- Fig. 2: is a cross-section of a self-locking cylindrical assembly according to the invention in the diametrical plane, however in its released state, in which it can be either inserted or removed;
- Fig. 3: is a cross-section of a self-locking cylindrical assembly according to Fig. 2, however in another diametrical plane, which is perpendicular to the plane of the cross-section according to Fig. 2;
- Fig. 4: is an isometric presentation of an example of exploitation of the assembly according to Figs 1 - 3 in a pulley bock; and
- Fig. 5: is a cross-section along the plane A - A according to Fig. 4.

A self-locking assembly comprises a hollow cylindrical bush 1, which is conceived symmetrically with respect to its longitudinal central axis 100 and on its first end portion thickened and furnished with an external seat 110, and on its second end portion open and furnished with a diametrically arranged radial passages 121. 122.

Said bush 1 is moreover furnished with an internal seat 13, which forms a step-like transition between a broader internal area 131 with larger diameter, which is located on said thicker end portion 11 of the bush 1, and a narrowed internal area 132 with smaller diameter, which is located on the opposite end portion 12 of the bush 1.

An actuating rod 14 is inserted into said bush 1 and is displaceable to and fro along its longitudinal axis 100 in the narrow area 132 and interconnected at its first end portion 141 in the broad area 131 of said bush 1 with an actuating button 140, the diameter of which is adjusted to said broad area 131, so that said rod 14 is guided along said broad area 131 by means of said button 140. A spring 15, in this particular case a compression spring, is inserted between said button 140 and said internal seat 13. so that the rod is surrounded by said spring.

On the second end portion 142, which is located within said narrow area 132 of the bush 1, said actuating rod 14 is furnished with a centrally located elongated hole 143, which is adapted to guide said actuating rod 14 when it is displaced to and fro in its axial direction along the interior of the bush 1, as well as with two guiding recesses 144', 144", which are adapted to receive protrusions 160', 160" of two arresting sliders 16', 16'", which are each per se inserted on the one hand within said recesses 144', 144" and on the other hand within said radial passages 121, 122 within the narrow area 132 on said opened end portion 12 of the bush 1.

Said guiding recesses 144', 144" are formed in a V-shaped arrangement and symmetrically with respect to said longitudinal axis 100 of the bush 1 in order to converge towards the broad area 131 and diverge towards the narrow end portion 132 of the bush 1. Moreover, each of said recesses 144', 144" is open towards the exterior and is on both its end portions furnished with an run-out 1441', 1442'; 1441", 1442", which extends parallel with the longitudinal axis 100 of the bush I and adapted for resting each belonging protrusion 160', 160" of the arresting slider 16', 16" thereon.

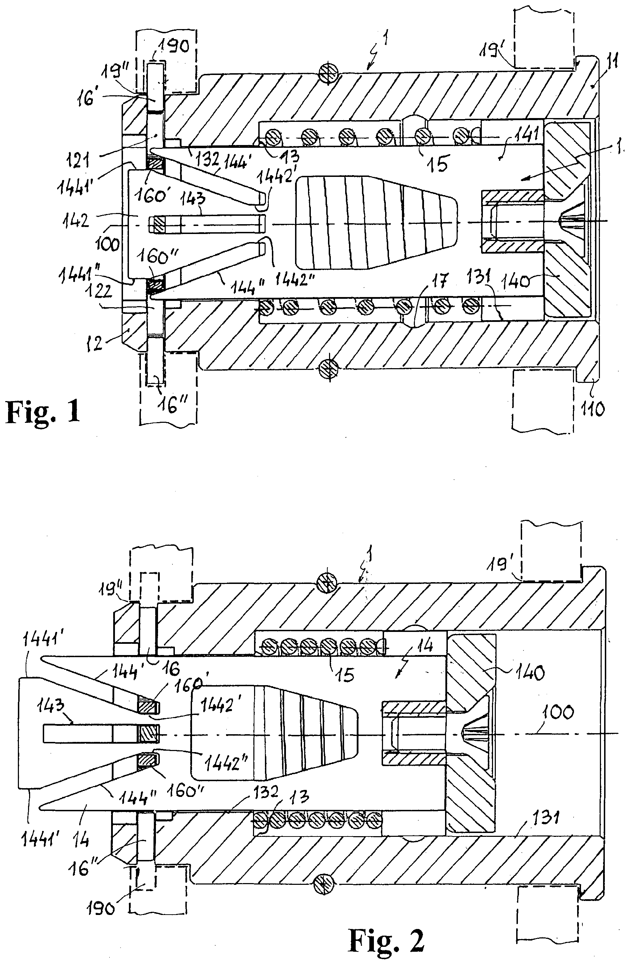

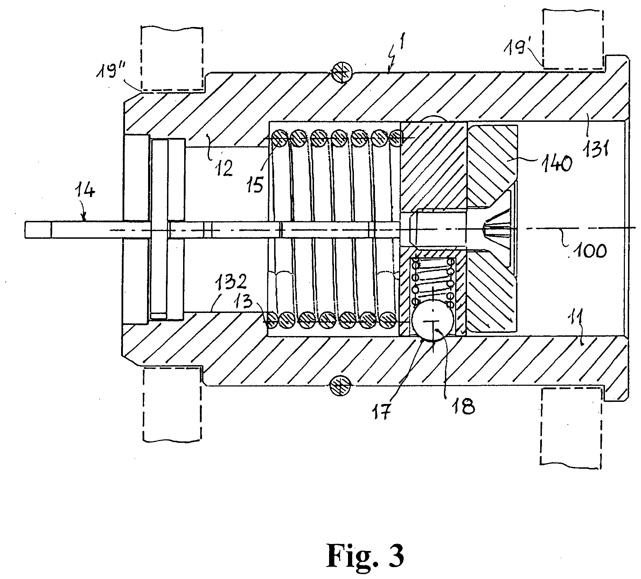

As shown in Fig. 3, a circumferential groove 17 is foreseen on the internal surface of said broad area 131 of the bush 1, and is adapted to cooperate with a spherical member 18, which is embedded within said actuating rod 14 and supported by a spring in order to enable arresting and maintaining said rod 14 in appropriate position (Figs 2 and 3), by which the assembly can either be placed into its operational position (Fig. 1), or optionally removed from said position.

The assembly according to the invention is insertable into each desired bore 19', 19" or a similar at least approximately cylindrical passage, so that the longitudinal axis 100 of the bush coincides with the geometrical axis of said bore 19', 19", wherein said assembly is allowed to be inserted in such extent, which is enabled by the external seat 110 on the broad end portion 11 of the bush 1. The opposite end portion of said bore 19', 19" is furnished with a circular groove 190, which is arranged in such manner that radial arresting sliders 16', 16" can be inserted into said groove 190 upon inserting of the bush 1 into said bore 19', 19". The presence of said groove 190 is however not compulsory in the view of functioning of the assembly according of the invention, but is nevertheless preferred and comfortable, since in such manner all parts protruding outside from said bore 19', 19" can be eliminated.

When inserting the assembly according to the invention into said bore 19', 19", the actuating button 140 needs to be pressed in the axial direction towards the interior of the bush 1 against the pressure of the spring 15, wherein the protrusions 160', 160" of the arresting slider 16', 16" are positioned in the area of run-outs 1442', 1442" of the guiding recesses 144', 144" located closer to the broader area 131 of the bush 1 and also closer to the central axis 100. In such state, said spherical member 18 enters the groove 17, and the actuating rod 14 is maintained in such position until inserting of the assembly into the bore 19', 19", or also removing thereof is performed. Each subsequent pressing said actuating button 140 in a direction towards the interior of the bush 1 results in at least partially removal of said spherical member 18 out from said groove 17, upon which the actuating rod 14 is pressed by the spring 15 towards the broad area 131, by which the protrusions 160', 160" of the arresting sliders 16', 16" are slided along the inclined guiding recesses 144', 144", by which the arresting sliders 16', 16" are displaced radially outwards in order to enter the groove 190 of the bore 19', 19", by which the protrusions 160', 160" are rest on run-outs 1441', 1441" and remain supported in such position up to the next pressing the actuating button 14 and displacing thereof towards the interior of the bush 1. In the described position, the assembly is arrested within the bore 19', 19", and the arresting button 14 is located within the bush 1 and does not protrude outwards.

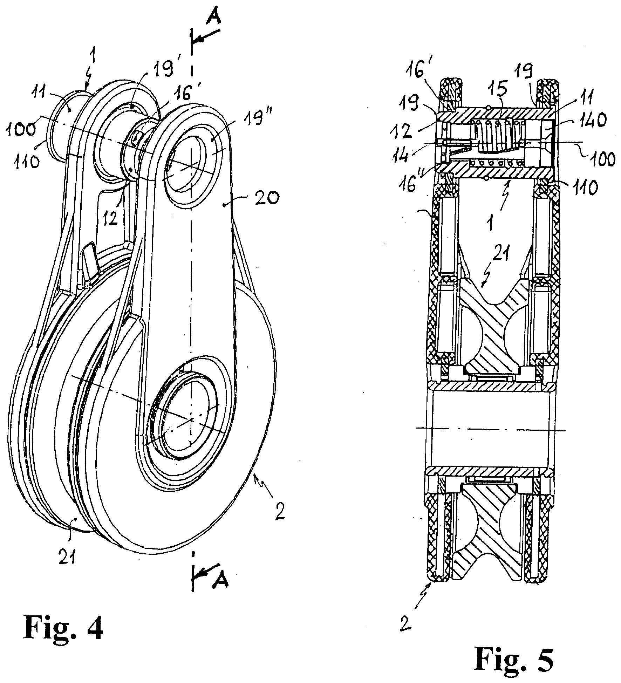

Practical exploitation of the assembly according to Figs 1 - 3 is shown in Figs 4 and 5. The assembly is adapted for inserting into the bore 19', 19" in a casing 20 of a simple portable pulley block 2 with a pulley 20, which is described in the Slovenian patent application SI-P-201200321 (WO 2014/065762) of the same applicant. In order to simplify placement of each towing cable around the pulley 20, the bush 1 is optionally insertable into said casing 20, from which the assembly can optionally also be removed. In this, said assembly is rotatable around the central axis 100, which results in essential benefits when said assembly is simultaneously used for the purposes of attaching or hanging said pulley block, or as an axle for the purposes of introducing of a further pulley.

## Claims

1. Self-locking cylindrical assembly, which is insertable into at least essentially cylindrical bore (19', 19"), in which said assembly can be secured against undesired removal, or from which said assembly can be optionally removed and optionally re-inserted, wherein said assembly comprises a hollow cylindrical bush (1) having a broader first end portion (11) with an external seat (110) and a second end portion (12) furnished with two radial passages (121, 122) which are adapted to receive radially displaceable arresting sliders (16', 16") and an actuating rod (14), which is inserted within said bush (1) and is displaceable to and fro along the central axis (100) of said bush (100), wherein said bush (1) is furnished with an internal seat (13), which is formed by a broader internal area (131) with a larger diameter located at the broad end portion (11) thereof and by a narrow internal area (132) with a smaller diameter located at the opposite end portion of said bush (1), while the actuating rod (14) is inserted within said bush (1), which is on its end portion (141) facing towards the broader end portion (11) of the bush (1) interconnected with an actuating button (140) having an outer diameter adjusted to the diameter of the broad internal area (131) of the bush (1), so that by displacing thereof in the longitudinal direction of the bush (1) the actuating rod (14) is guided by means of the actuating button (140), and wherein a spring (15) is inserted between said actuating button (140) and said seat (13), by which said actuating button (140) is pressed along said axis (100) towards the broader end portion (11) of the bush (1), **characterized in that** the actuating rod (14) is on its opposite end portion (12) furnished with a centrally arranged and towards the axis (100) extending elongated hole (143), which is adapted to guide said actuating rod (14), as well as with two guiding recesses (144', 144"), which are open towards the exterior and positioned in a V-shaped arrangement converging thereby towards the broad end portion (11) of the bush (1) and diverging towards the opposite end portion (12) of the bush (1) and are moreover adapted to cooperate with protrusions (160', 160") of the arresting sliders (16', 16'), which are radially displaceable within said passages (121, 122) in said bush (1), wherein said recesses (144', 144") are on both end portions thereof furnished with run-outs (1441', 1441"; 1442', 1442") extending parallel to said central axis (100) of the bush (1).

2. Self-locking cylindrical assembly according to claim 1, **characterized in that** said spring (15) is a compression spring, by which the actuating rod (14) is surrounded.

3. Self-locking cylindrical assembly according to claim 1, **characterized in that** a circumferential groove (17) is foreseen on the internal surface of the broad internal area (131) of the bush (1), and is adapted to cooperate with an elastically supported spherical member (18), which is embedded within the actuating rod (14) for the purposes of arresting and retaining the rod (14) in each pre-determined position, which is defined by means of the groove (17).

## Patentansprüche

1. Selbstsichernde zylindrische Anordnung, die in eine mindestens im Wesentlichen zylindrische Bohrung (19'. 19") eingeführt werden kann, in der die Anordnung gegen unerwünscht Entnahme gesichert werden kann oder aus der die Anordnung optional entnommen und optional wieder eingeführt werden kann, wobei die Anordnung Folgendes umfasst: eine hohle zylindrische Buchse (1), die einen breiteren ersten Endabschnitt (11) mit einem externen Sitz (110) und einen zweiten Endabschnitt (12) aufweist, der mit zwei radialen Durchgängen (121, 122) versehen ist, die dafür aufgelegt sind, radial verschiebbare Arretiergleitstücke (16', 16") aufzunehmen; und eine Betätigungsstange (14), die in die Buchse (1) eingeführt ist und entlang der Mittelachse (100) der Buchse (100) vor und zurück verschoben werden kann, wobei die Buchse (1) mit einem inneren Sitz (13) versehen ist, der gebildet wird durch: einen breiteren inneren Bereich (131) mit einem größeren Durchmesser, der sich an ihrem breiten Endabschnitt (11) befindet, und einen schmalen inneren Bereich (132) mit einem kleineren Durchmesser, die sich am gegenübarliegenden Endabschnitt der Buchse (1) befindet, während die Betätigungsstange (14) in die Buchse (1) eingeführt ist, die an ihrem Endabschnitt (141), der in Richtung des breiteren Endabschnitts (11) der Buchse (1) weist, mit einem Betätigungsknopf (140) verbunden ist, der einen Außendurchmesser aufweist, der an den Durchmesser des breiten inneren Bereichs (131) der Buchse (1) angepasst ist, so dass die Betätigungsstange (14) durch ihr Verschieben in der Längsrichtung der Buchse (1) mittels des Betätigungsknopfes (140) geführt wird und wobei eine Feder (15) zwischen den Betätigungsknopf (140) und den Sitz (13) eingesetzt ist, durch die der Betätigungsknopf (140) entlang der Achse (100) in Richtung des breiteren Endabschnitts (11) der Buchse (1) gedrängt wird, **dadurch gekennzeichnet, dass** die Betätigungsstange (14) an ihrem gegenüberliegenden Endabschnitt (12) versehen ist mit: einem mittig angeordneten und in Richtung der Achse (100) sich erstreckenden länglichen Loch (143), das dafür ausgelegt ist, die Betätigungsstange (14) zu führen, sowie zwei Führungsaussparungen (144', 144"), die in Richtung der Außenseite offen sind und in einer V-förmigen Anordnung positioniert sind, die dadurch in Richtung des breiten Endabschnitts (11) der Buchse (1) konvergieren und in Richtung des gegenüberliegenden Endabschnitts (12) der Buchse (1) divergieren, und des Weiteren dafür ausgelegt sind, mit Vorsprüngen (160', 160") der Arretiergleitstücke (16', 16') zusammenzuwirken, die innerhalb der Durchgänge (121, 122) in der Buchse (1) radial verschiebbar sind, wobei die Aussparungen (144', 144") an ihren beiden Endabschnitten mit Ausläufen (1441', 1441"; 1442', 1442") versehen sind, die sich parallel zu der Mittelachse (100) der Buchse (1) erstrecken.

2. Selbstsichernde zylindrische Anordnung nach Anspruch 1, **dadurch gekennzeichnet, dass** die Feder (15) eine Kompressionsfeder ist, von der die Betätigungsstange (14) umgeben ist.

3. Selbstsichernde zylindrische Anordnung nach Anspruch 1, **dadurch gekennzeichnet, dass** eine Umfangsnut (17) in der Innenfläche des breiten inneren Bereichs (131) der Buchse (1) vorgesehen ist und dafür ausgelegt ist, mit einem elastisch gestützten sphärischen Elernent (18) zusammenzuwirken, das in die Betätigungsstange (14) eingebettet ist, um die Stange (14) in jeder vorgegebenen Position, die mittels der Nut (17) definiert ist, zu arretieren und zu halten.

## Revendications

1. Ensemble cylindrique autobloquant, qui peut être inséré dans au moins un alésage (19', 19") essentiellement cylindrique au sein duquel ledit ensemble peut être protégé contre un retrait non désiré ou à partir duquel et dans lequel ledit ensemble peut être éventuellement retiré et éventuellement réinséré, ledit ensemble comprenant une douille cylindrique creuse (1) présentant une première partie extrémité (11) plus large avec un siège externe (110) et une deuxième partie extrémité (12) munie de deux passages radiaux (121,122) qui sont conçus pour accueillir des coulisseaux d'arrêt (16', 16") pouvant être déplacés de manière radiale et une tige d'actionnement (14) qui est insérée dans ladite douille (1) et peut être déplacée d'avant en arrière le long de l'axe central (100) de ladite douille (1), ladite douille (1) étant munie d'un siège interne (13) qui est formé d'une zone interne plus large (131) avec un diamètre plus large, située au niveau de la partie extrémité large (11) de celle-ci, et d'une zone interne étroite (132) avec un diamètre plus petit, située au niveau de la partie extrémité opposée de ladite douille (1), tandis que la tige d'actionnement (14) est insérée dans ladite douille(1), qui est, sur sa partie extrémité (141) regardant vers la partie extrémité plus large (11) de la douille (1), interconnectée avec un bouton d'actionnement (140) présentant un diamètre extérieur ajusté au diamètre de la zone interne large (131) de la douille (1), de sorte que, lors de son déplacement dans la direction longitudinale de la douille (1), la tige d'actionnement (14) est guidée au moyen du bouton d'actionnement (140), un ressort (15), grâce auquel le bouton d'actionnement (140) est pressé le long dudit axe (100) en direction de la partie extrémité plus large (11) de la douille (1), étant inséré entre ledit bouton d'actionnement (140) et ledit siège (13), **caractérisé en ce que** la tige d'actionnement (14) est munie, sur sa partie extrémité (12) opposée, d'un trou allongé (143), agencé de manière centrale et s'étendant en direction de l'axe (100), qui est conçu pour guider ladite tige d'actionnement (14), ainsi que de deux renfoncements de guidage (144',144") qui sont ouverts en direction de l'extérieur et sont positionnés en un agencement en forme de V convergent en direction de la partie extrémité large (11) de la douille (1) et divergent en direction de la partie extrémité (12) opposée de la douille (1) et sont en outre conçus pour coopérer avec des saillies (160', 160") des coulisseaux d'arrêt (16', 16') qui peuvent être déplacées de manière radiale au sein desdits passages (121,122) dans ladite douille (1), lesdits renfoncements (144', 144") étant, sur les deux parties extrémité de celle-ci, munis d'appendices (1441', 1441" ; 1442', 1442") s'étendant parallèlement audit axe central (100) de la douille (1).

2. Ensemble cylindrique autobloquant selon la revendication 1, **caractérisé en ce que** ledit ressort (15) est un ressort de compression qui entoure la tige d'actionnement (14).

3. Ensemble cylindrique autobloquant selon la revendication 1, **caractérisé en ce qu'**une rainure circonférentielle (17) est prévue sur la surface interne de la zone interne large (131) de la douille (1) et est conçue pour coopérer avec un élément sphérique supporté de manière élastique (18) qui est intégré au sein de la tige d'actionnement (14) de manière à arrêter et retenir la tige (14) dans une position prédéterminée respective qui est définie au moyen de la rainure (17).
